(19) Europäisches Patentamt
European Patent Office
Office européen des brevets

(11) Veröffentlichungsnummer: **0 303 209**
**A2**

(12) **EUROPÄISCHE PATENTANMELDUNG**

(21) Anmeldenummer: **88112837.5**

(51) Int. Cl.4: **G11B 7/24**

(22) Anmeldetag: **06.08.88**

(30) Priorität: **14.08.87 DE 3727093**

(43) Veröffentlichungstag der Anmeldung:
**15.02.89 Patentblatt 89/07**

(84) Benannte Vertragsstaaten:
**DE FR GB IT NL**

(71) Anmelder: **BASF Aktiengesellschaft**
**Carl-Bosch-Strasse 38**
**D-6700 Ludwigshafen(DE)**

(72) Erfinder: **Barzynski, Helmut, Dr.**
**An der Ameisenhalde 49**
**D-6702 Bad Dürkheim(DE)**
Erfinder: **Benthack-Thoms, Heidi, Dr.**
**Wilhelm-Busch-Strasse 18**
**D-6703 Limburgerhof(DE)**
Erfinder: **Hellwig, Karl-Ruediger**
**Grasweg 23**
**D-6521 Moerstadt(DE)**
Erfinder: **Taubitz, Christof, Dr.**
**In der Dreispitz 15**
**D-6706 Wachenheim(DE)**

(54) **Flächenförmiges, mehrschichtiges, laseroptisches Aufzeichnungsmaterial.**

(57) Flächenförmiges, mehrschichtiges, laseroptisches Aufzeichnungsmaterial, mit

a) einem optisch klaren und isotropen, homogenen, von Orientierungsdoppelbrechung freien Träger und

b) mindestens einer amorphen, thermisch veränderbaren Aufzeichnungsschicht, wobei der Träger (a)

$a_1$) eine oder zwei strukturierte Oberflächen aufweist, wobei die Strukturen im Mikrometer-und/oder Submikrometerbereich liegen,

und aus einem Gemisch von Poly(2,6-dimethylphenylenether) (PPE) mit mindestens einem Styrolpolymerisat gebildet wird, wobei der Gehalt an PPE in diesem Gemisch etwa 25 bis 45 Gew.%, bezogen auf das Gemisch, beträgt und wobei

$a_2$) derjenige Anteil des Gemischs, bei dem es sich nicht um PPE handelt, bezogen auf diesen Anteil,

$a_{21}$) 0,1 bis 8 Gew.% an Cyanoethylengruppen und/oder
$a_{22}$) 1 bis 60 Gew.% an 1-Methyl-1-phenylethylengruppen und/oder
$a_{23}$) 1 bis 60 Gew.% an 4′-Methylphenyl-ethylengruppen und/oder
$a_{24}$) 0,01 bis 10 Gew.% an Gruppen der allgemeinen Formel I

EP 0 303 209 A2

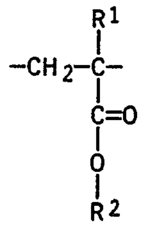

I,

worin R' ein Wasserstoffatom oder einen Methylrest und $R^2$ einen $C_1$- bis $C_{10}$-Alkyl-, $C_5$- bis $C_8$-Cycloalkyl- oder einen $C_6$- bis $C_{10}$-Arylrest bedeutet,

sowie auf alle Fälle

$a_{25}$) mindestens 40 Gew.% an Phenylethylen-Gruppen enthält.

Ferner werden Audio- oder Video-Compact-Disks beansprucht, die einen entsprechend aufgebauten Träger enthalten.

## Flächenförmiges, mehrschichtiges, laseroptisches Aufzeichnungsmaterial

Die Erfindung betrifft ein neues, in seinen anwendungstechnischen Eigenschaften verbessertes, flächenförmiges, mehrschichtiges, laseroptisches Aufzeichnungsmaterial mit

a) einer oder mehreren Schichten aus einem optisch klaren und isotropen, homogenen, von Orientierungsdoppelbrechung freien Gemisch von Poly(2,6-dimethylphenylenether) (PPE) mit einem Styrolpolymerisat als Träger und

b) mindestens einer amorphen, thermisch veränderbaren Aufzeichnungsschicht.

Aufzeichnungsmaterialien dieser Art sind z.B. aus der US-A-4 373 065 oder der EP-A-225 801 bekannt.

Im Rahmen dieser Erfindung umfaßt der Begriff "flächenförmig" dabei alle Raumformen, deren Dicke erheblich kleiner ist als ihre Länge und Breite. Demnach kann es sich hier um band-, platten- oder scheibenförmige Aufzeichnungsmaterialien handeln, wobei die scheibenförmigen im allgemeinen auch als Datenplatten oder Disks bezeichnet werden.

Der Begriff "amorph" gibt an, daß das Material der Aufzeichnungsschichten (b) keine kristallinen Bereiche aufweist, welche größer sind als die thermisch veränderten Bereiche, sondern daß es in dieser Größenordnung optisch isotrop ist.

In die Aufzeichnungsschichten (b) von Aufzeichnungsmaterialien der in Rede stehenden Art werden digitale Daten mit Hilfe impulsmodulierter Schreiblaserstrahlen in Form thermisch veränderter Bereiche eingeschrieben. Dabei sind die Schreiblaserstrahlen auf die Aufzeichnungsschichten (b) fokussiert und/oder treffen senkrecht auf sie auf. Für das Einschreiben analoger Daten können auch Dauerstrich-Laser angewendet werden. Im Falle eingeschriebener digitaler Daten haben die thermisch veränderten Bereiche der Aufzeichnungsschichten (b) eine runde oder elliptische Grundfläche. Im Falle analoger Daten sind die thermisch veränderten Bereiche von beliebiger Grundfläche.

Für das Lesen der Daten verwendet man im allgemeinen kontinuierlich emittierte Leselaserstrahlen (Dauerstrich-Laserstrahlen), deren Energie nicht dazu ausreicht, weitere Veränderungen in den Aufzeichnungsschichten (b) hervorzurufen. Die Leselaserstrahlen sind dabei gleichfalls auf die Aufzeichnungsschichten (b) fokussiert und/oder treffen senktrecht auf diese auf. Beim Lesevorgang wird im allgemeinen das von den Aufzeichnungsschichten (b) reflektierte Licht mit Hilfe geeigneter optischer Anordnungen erfaßt, üblichen und bekannten Detektoren zugeführt und durch geeignete elektronische Apparate in Signale umgewandelt.

Diese Schreib- und Leseverfahren sowie die entsprechenden hierfür geeigneten Aufzeichnungsmaterialien kennzeichnet man daher im allgemeinen mit dem Begriff "laseroptisch", wobei man allgemein die Schreib- und Leseverfahren unter dem Begriff "Datenaufzeichnung" subsumiert.

Dabei können die thermisch veränderten Bereiche der Aufzeichnungsschichten (b) die Form von Löchern haben, welche die Aufzeichnungsschicht ganz durchdringen. In diesem Fall spricht man allgemein von ablativer laseroptischer Datenaufzeichnung. Beim Auslesen der Daten mit einem Leselaserstrahl wird die unterschiedliche Reflektivität der Löcher und der unveränderten Bereiche der Aufzeichnungsschicht (b) ausgenutzt. Um hierbei eine hohe Empfindlichkeit und ein hohes Signal-Rausch-Verhältnis zu erzielen, kann eine Reflektorschicht mitverwendet werden, die durch die Lochbildung freigelegt wird und den Leselaserstrahl besonders stark reflektiert.

Die thermisch veränderten Bereiche können auch die Form von Kratern (pits) haben, welche gegebenenfalls einen sauber ausgebildeten Kraterrand (wall) aufweisen. In diesem Falle spricht man von deformativer laseroptischer Datenaufzeichnung. Hierbei werden die Daten über die Beugung des Lichts des Leselaserstrahls an den Kratern ausgelesen.

Durch die thermische Veränderung können indes auch Bereiche entstehen, in denen keine Ablation oder Deformation, sondern eine Phasenumwandlung des Materials der Aufzeichnungsschicht in eine andere Stoffmodifikation stattgefunden hat. In einem solchen Falle spricht man von laseroptischer Datenaufzeichnung durch Phasenumwandlung. Im allgemeinen wird durch die Phasenumwandlung die Reflektivität in den beschriebenen Bereichen erniedrigt und/oder die Lichtdurchlässigkeit erhöht. Indessen kann es unter Umständen auch zum gegenteiligen Effekt kommen, d.h. die Reflektivität wird erhöht und/oder die Lichtdurchlässigkeit erniedrigt. Im allgemeinen werden die in dieser Weise thermisch veränderten Bereiche als Flecke (spots) bezeichnet.

Die Aufzeichnungsschichten (b) können indes auch mit Schichten unterlegt sein, welche sich beim Bestrahlen ausdehnen oder Gase entwickeln, wodurch die Aufzeichnungsschichten (b) lokal gedehnt werden. In dieser Weise bilden sich in der Oberfläche der Aufzeichnungsschichten (b) Reliefstrukturen aus, welche die eingeschriebenen Daten beinhalten.

Die Gase können aber auch in den Aufzeichnungsschichten (b) selbst unter Bildung kleiner lichtstreuender Bläschen freigesetzt werden. Dies nennt man im allgemeinen vesikulare Datenaufzeichnung.

Außerdem kann in den thermisch veränderten Bereichen eine chemische Reaktion eines Bestandteils oder eine chemische Reaktion zwischen mehreren Bestandteilen der Aufzeichnungsschichten (b) stattgefunden haben, wodurch die optischen Eigenschaften der Aufzeichnungsschichten (b) in diesen Bereichen geändert worden sind.

Eine lokale Veränderung der Reflektion von Aufzeichnungsschichten (b) beim Bestrahlen kann aber auch über die Vergrößerung oder das Zusammenschmelzen von kleinen Partikeln zustandekommen. Diese kleinen Partikel, beispielsweise Goldkörnchen, können dabei in eine Matrix eingelagert sein. Es kann sich dabei aber auch um metallbedampfte Kunststoffkügelchen handeln. Aufzeichnungsschichten (b), welche aus diesen Kügelchen bestehen, weisen eine überaus niedrige Grundreflektivität auf und werden im allgemeinen als "Mottenaugenschichten" (moth eye layer) bezeichnet.

Nicht zuletzt können die thermisch veränderten Bereiche in Aufzeichnungsschichten (b), welche aus senkrecht zu ihrer Oberfläche magnetisierten, amorphen, ferrimagnetischen Schichten bestehen, die Form von Flecken (spots) haben, welche eine der ursprünglichen Richtung entgegengesetzte Magnetisierungsrichtung aufweisen. Diese "spots" entstehen beim Erwärmen des ferrimagnetischen Materials dieser Schichten durch einen Laserstrahl unter dem Einfluß eines anliegenden magnetischen Hilfsfeldes: Durch die Erwärmung nimmt die Koerzitivfeldstärke $H_c$ des ferrimagnetischen Materials ab. Unterschreitet dabei die Koerzitivfeldstärke $H_c$ bei einer von dem jeweils verwendeten Material abhängigen kritischen Temperatur die Feldstärke des anliegenden magnetischen Hilfsfeldes, so wird der betreffende Bereich ummagnetisiert.

Für das Lesen dieser Bereiche verwendet man linear polarisiertes Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht (b) selbst oder von einer hinter ihr angeordneten Reflektionsschicht reflektiert, wobei es zu einer Wechselwirkung zwischen den magnetischen Momenten in der Aufzeichnungsschicht (b) und dem magnetischen Vektor der Laserlichtwelle kommt. Durch diese Wechselwirkung wird die Ebene der Polarisation $\vec{E}$ des Laserlichts, welches von einem "spot" oder von einer dahinter liegenden Reflektionsschicht reflektiert wird, gegenüber der ursprünglichen Ebene um einen kleinen Winkel gedreht. Geschieht diese Drehung der Ebene der Polarisation $\vec{E}$ bei der Reflektion des Lichts an der Aufzeichnungsschicht (b) selbst, so bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, so spricht man vom Faraday-Effekt und vom Faraday-Drehwinkel.

Diese Drehung der Ebene der Polarisation $\vec{E}$ des vom Aufzeichnungsmaterial reflektierten Laserlichts kann mit Hilfe geeigneter optischer und elektronischer Geräte gemessen und in Signale umgesetzt werden.

Aufzeichnungsschichten (b) dieser Art kennzeichnet man daher im allgemeinen mit dem Begriff "magneto-optisch".

Im Falle mehrschichtiger, laseroptischer Datenplatten und auch im Falle der bekannten Audio- und Video-Compact-Disks verwendet man in allgemeinen zum Schreiben und/oder Lesen digitaler Daten die üblichen und bekannten Plattenlaufwerke. Ein solches Plattenlaufwerk enthält im wesentlichen einen Plattendrehteller und einen laseroptischen Schreib- und Lesekopf, dazu noch mechanische Servoeinrichtungen zur Korrektur der Spurlage, Autofokussiereinrichtungen, optische Elemente zur Analyse von Spurlagen- und Autofokusfehlern, Detektoreinrichtungen mit vorgeschalteten optischen Komponenten zur Erfassung des von den Datenplatten reflektierten Lichts des Leselaserstrahls sowie geeignete elektronische Bauteile. Üblicherweise enthält ein laseroptischer Schreib- und Lesekopf Laserdioden, wleche Infrarotlicht emittieren und aus Halbleitermaterialien wie GaAlAs bestehen. Darüber hinaus weist ein solcher Schreib- und Lesekopf im allgemeinen noch weitere geeignete optische Bauteile, wie dielektrische Strahlteiler, Polarisationsstrahlteiler oder polarisationsunabhängige Strahlteiler sowie eine $\lambda/4$- oder $\lambda/2$-Platte auf.

Im allgemeinen enthalten die bekannten laseroptischen Aufzeichnungsmaterialien einen dimensionsstabilen Träger, welcher bei laseroptischen Datenplatten oder bei den bekannten Audio- und Video-Compact-Disks üblicherweise eine 1,2 mm dicke, 83 bis 350 mm durchmessende, optisch klare Scheibe aus einem Kunststoff oder einem Kunststoffgemisch ist. Als Kunststoffe kommen hierbei z.B. Polycarbonat, Polymethylmethacrylat, Polymethylpenten, Celluloseacetobutyrat oder Gemische aus Poly(vinylidenfluorid) und Polymethylmethacrylat in Betracht. Träger dieser Art weisen indes schwerwiegende Nachteile, wie etwa einen zu hohen orientierungsoptischen Koeffizienten (Orientierungsdoppelbrechung), eine zu hohe Verarbeitungstemperatur, eine zu niedrige Wärmeformbeständigkeit, einen zu geringen E-Modul, eine zu geringe Härte oder eine zu hohe Wasseraufnahme auf. Je nach verwendetem Kunststoff oder Kunststoffgemisch stellen sich diese Nachteile mehr oder weniger gehäuft ein; keines der bekannten Materialien hat ein optimales Eigenschaftsprofil.

Entspricht der dimensionsstabile Träger indes einer Schicht (a) des aus der US-A-4 373 065 bekannten

laseroptischen Aufzeichnungsmaterials, so treten viele der genannten Nachteile im allgemeinen nicht mehr auf. Eine solche Schicht (a), welche aus Poly(2,6-dimethylphenylenether) (PPE) und Polystyrol besteht, ist optisch klar und isotrop, homogen, von Orientierungsdoppelbrechung frei, wärmeformbeständig und mechanisch stabil. Darüber hinaus ist ihre Wasseraufnahme gering. Diese Eigenschaftsprofil der Schicht (a) bleibt bei ihrer Verwendung als Träger erhalten.

Dennoch weisen diese Träger Nachteile auf, welche ihre Anwendung in der Praxis verhindern. So ist die Verarbeitungstemperatur der bekannten Polystyrol-PPE-Gemische aufgrund ihrer geringen Fließfähigkeit unerwünscht hoch. Versucht man dies durch Erniedrigung des PPE-Anteils und/oder durch Erniedrigung des Molekulargewichts des Polystyrols zu beheben, so handelt man sich dabei erneut Nachteile, wie z.B. eine erhöhte Orientierungsdoppelbrechung, einen verringerten E-Modul oder eine geringe Lösungsmittelbeständigkeit, ein. Laseroptische Aufzeichnungsmaterialien, welche solche Träger enthalten, haben oftmals bei gleicher Art der Aufzeichnungsschicht (b) ein stark variierendes Signal-Rausch-Verhältnis. Außerdem ist häufig und in nicht vorhersagbarer Weise das Wiederauffinden der eingeschriebenen Daten gestört, d.h. das sogenannte "tracking"-Verhalten solcher Aufzeichnungsmaterialien ist wenig befriedigend und für die Praxis, für welche ein rascher Zugriff zu den Daten essentiell ist, nicht ausreichend. Auch mit den aus der EP-A-225 801 bekannten Trägermaterialien aus PPE-Polystyrol-Gemischen, die zur Herabsetzung der Verarbeitungstemperatur ein vergleichsweise niedermolekulares PPE enthalten sollen, werden diese Nachteile nicht vollkommen beseitigt und werden die bestehenden Probleme noch nicht zur vollen Zufriedenheit gelöst.

Aufgabe der vorliegenden Erfindung ist es, ein neues, flächenförmiges, laseroptisches Aufzeichnungsmaterial zu finden, welches die Nachteile des Standes der Technik nicht mehr aufweist.

Demgemäß wurd ein neues, flächenförmiges, mehrschichtiges, laseroptisches Aufzeichnungsmaterial mit

a) einer oder mehreren Schichten aus einem optisch klaren und isotropen, homogenen, von Orientierungsdoppelbrechung freien Gemisch von Poly(2,6-dimethylphenylenether) (PPE) mit einem Styrolpolymerisat als Träger und

b) mindestens einer amorphen, thermisch veränderbaren Aufzeichnungsschicht gefunden, welches dadurch gekennzeichnet ist, daß die den dimensionsstabilen Träger bildende Schicht (a)

$a_1$) eine oder zwei strukturierte Oberflächen aufweist, wobei die Strukturen im Mikrometer- und/oder Submikrometerbereich liegen,

und aus einem solchen PPE, mindestens ein Styrolpolymerisat sowie gegebenenfalls Zusatzstoffe enthaltenden Gemisch gebildet wird, in dem der Gehalt an PPE im Bereich von 25 bis 45 Gew.%, bezogen auf das Gemisch, liegt und in dem

$a_2$) derjenige Anteil des Gemischs, bei dem es sich nicht um PPE handelt, bezogen auf diesen Anteil ($a_2$),
$a_{21}$) 0,1 bis 8 Gew.% an Cyanoethylengruppen und/oder
$a_{22}$) 1 bis 60 Gew.% an 1-Methyl-1-phenyl-ethylengruppen und/oder
$a_{23}$) 1 bis 60 Gew.% an 4′-Methylphenyl-ethylengruppen und/oder
$a_{24}$) 0,01 bis 10 Gew.% an Gruppen der allgemeinen Formel I

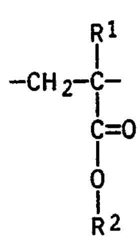

I,

worin $R^1$ ein Wasserstoffatom oder einen Methylrest und $R^2$ einen $C_1$- bis $C_{10}$-Alkyl-, $C_5$- bis $C_8$-Cycloalkyl- oder einen $C_6$- bis $C_{10}$-Arylrest bedeutet,
enthält, mit der Maßgabe, daß

$a_{25}$) gleichgültig ob eine oder mehrere der Gruppen ($a_{21}$) bis ($a_{24}$) und darüber hinaus gegebenenfalls auch noch Zusatzstoffe in ($a_2$) enthalten sind, der Anteil ($a_2$) in jedem Fall einen Gehalt an Phenylethylengruppen von nicht kleiner als 40 Gew.% aufweist.

Wesentlicher Bestandteil des erfindungsgemäßen Aufzeichnungsmaterials ist die den dimensionsstabilen Träger bildende Schicht (a), die nachfolgend auch einfach als "erfindungsgemäß zu verwendender Träger (a)" oder schlicht "Träger (a)" bezeichnet wird.

Der erfindungsgemäß zu verwendende Träger (a) weist eine oder zwei strukturierte Oberfläche(n) ($a_1$) auf. Diese Oberflächen ($a_1$) sind der oder den Aufzeichnungsschichten (b) zugekehrt. Trägern (a), welche nur eine strukturierte Oberfläche ($a_1$) aufweisen, wird der Vorzug gegeben.

Die Strukturen in der Oberfläche ($a_1$) liegen im Mikrometer- und/oder Submikrometerbereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten beinhalten oder darstellen, so wie diese beispielsweise bei den bekannten Audio- oder Video-Compact-Disks der Fall ist, oder sie können der Kodierung der eingeschriebenen Daten dienen. Die Strukturen bestehen in aller Regel aus erhabenen Teilen und/oder aus Vertiefungen. Diese liegen in Form von durchgehenden konzentrischen oder spiralförmigen Spurrillen oder isolierten Hügeln und/oder Löchern vor. Außerdem kann die Struktur eine mehr oder weniger glatte Wellenform haben. Den Spurrillen wird hierbei der Vorzug gegeben. Sie weisen in ihrer Querrichtung eine rechteckige sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 0,8 µm breiten "grooves", zwischen denen jeweils ein 1 bis 3 µm breites "land" liegt.

Das Gemisch, welches erfindungsgemäß den Träger (a) aufbaut, enthält, bezogen auf das Gemisch, 25 bis 45 Gew.%, vorzugsweise 32 bis 42 Gew.% und insbesondere 34 bis 40 Gew.%, Poly(2,6-dimethylphenylenether) (PPE). Die intrinsische Viskosität des PPE liegt dabei im allgemeinen im Bereich von 0,5 bis 0,8 dl/g, vorzugsweise im Bereich von 0,5 bis 0,7 dl/g (gemessen bei 25°C in Chloroform). Verfahren zur Herstellung von PPE sind beispielsweise aus der EP-A-0 161 454 bekannt.

Außerdem enthält dieses Gemisch einen Anteil ($a_2$), bei dem es sich nicht um PPE handelt. Dieser Anteil ($a_2$) macht 55 bis 75 Gew.%, vorzugsweise 58 bis 68 Gew.% und insbesondere 60 bis 66 Gew.%, des Gemisches aus.

Besonders vorteilhafte Gemische, welche zum Aufbau des Trägers (a) in besonderem Maße geeignet sind, bestehen aus 34 bis 40 Gew.% PPE und 60 bis 66 Gew.% des Anteils ($a_2$).

Erfindungsgemäß enthält der Anteil ($a_2$) Polymerisate, welche als wesentlichen Bestandteil Styrol einpolymerisiert enthalten, oder aber der Anteil ($a_2$) besteht im wesentlichen aus Polystyrol. Unter "wesentlich" ist hierbei ein einpolymerisierter Styrolgehalt in den Polymerisaten des Anteils ($a_2$) von über 40 Gew.% zu verstehen, was gleichbedeutend ist mit einem Gehalt an Phenylethylengruppen von über 40 Gew.%. Dieser Gehalt soll 40 Gew.% nicht unterschreiten, weil es ansonsten zu einer gewissen Entmischung des Anteils ($a_2$) und des PPE im Laufe der Zeit kommen kann, was letztlich zu einer Trübung des Trägers (a) führt und diesen unbrauchbar macht.

Erfindungsgemäß enthält der Anteil ($a_2$) des Gemisches aus PPE und ($a_2$) Gruppen ($a_{21}$), ($a_{22}$), ($a_{23}$) und/oder ($a_{24}$), welche einzeln oder in Kombination mitverwendet werden. Gleichgültig, ob eine oder mehrere dieser Gruppen ($a_{21}$) bis ($a_{24}$) zur Anwendung kommen, unterschreitet der Gehalt von ($a_2$) an ($a_{25}$) Phenylethylengruppen nicht 40 Gew.%; allerhöchstens ist er gleich 40 Gew.%.

Demnach kann der Anteil ($a_2$) an dem Gemisch, welches den erfindungsgemäß zu verwendenden Träger (a) aufbaut, aus den folgenden Kombinationen von Gruppen bestehen oder diese Kombinationen von Gruppen enthalten:

Phenylethylen + ($a_{21}$),
Phenylethylen + ($a_{21}$) + ($a_{22}$),
Phenylethylen + ($a_{21}$) + ($a_{23}$),
Phenylethylen + ($a_{21}$) + ($a_{24}$),
Phenylethylen + ($a_{21}$) + ($a_{22}$) + ($a_{23}$),
Phenylethylen + ($a_{21}$) + ($a_{22}$) + ($a_{24}$),
Phenylethylen + ($a_{21}$) + ($a_{23}$) + ($a_{24}$),
Phenylethylen + ($a_{21}$) + ($a_{22}$) + ($a_{23}$) + ($a_{24}$),
Phenylethylen + ($a_{22}$),
Phenylethylen + ($a_{22}$) + ($a_{23}$),
Phenylethylen + ($a_{22}$) + ($a_{24}$),
Phenylethylen + ($a_{22}$) + ($a_{23}$) + ($a_{24}$),
Phenylethylen + ($a_{23}$),
Phenylethylen + ($a_{23}$) + ($a_{24}$) und

Phenylethylen + ($a_{24}$).

Hierbei sind die Kombinationen aus den Phenylethylengruppen ($a_{25}$) und den Gruppen ($a_{21}$), ($a_{22}$), ($a_{23}$) oder ($a_{24}$) sowie die Kombinationen aus den Phenylethylengruppen ($a_{25}$) und den Gruppen ($a_{22}$) und ($a_{23}$) besonders vorteilhaft.

Von diesen wird wiederum die Kombination aus den Phenylethylengruppen ($a_{25}$) und den Gruppen ($a_{22}$) und ($a_{23}$) ganz besonders bevorzugt.

Bei der Gruppe ($a_{21}$) handelt es sich um die Cyanoethylengruppe, welche sich von dem Monomer Acrylnitril ableitet. Ist diese Gruppe alleine in ($a_2$) enthalten, so soll ihre Menge 0,1, vorzugsweise 1 und insbesondere 5 Gew.% von ($a_2$) nicht unterschreiten. Finden neben dieser Gruppe noch andere Gruppen ($a_{22}$), ($a_{23}$) und/oder ($a_{24}$) Verwendung, so liegt ihre Menge bei 0,1 bis 8 Gew.%. Gleichgültig ob ($a_{21}$) alleine oder zusammen mit anderen Gruppen ($a_{22}$), ($a_{23}$) und/oder ($a_{24}$) verwendet wird, soll der Gehalt von ($a_2$) an dieser Gruppe 8 Gew.% nicht überschreiten, weil sonst die Gefahr besteht, daß sich dann das Gemisch aus ($a_2$) und PPE entmischt.

Bei der Gruppe ($a_{22}$) handelt es sich um die 1-Methyl-1-phenyl-ethylengruppe, welche sich von dem Monomer $\alpha$-Methylstyrol ableitet. Ist diese Gruppe alleine in ($a_2$) enthalten, so soll ihre Menge 1 Gew.%, vorzugsweise 2 Gew.% und insbesondere 4 Gew.%, von ($a_2$) nicht unterschreiten und 60 Gew.% von ($a_2$) nicht überschreiten. Es hat sich gezeigt, daß eine ($a_{22}$)-Menge in ($a_2$) von 1 bis 30, vorzugsweise 1 bis 10 und insbesondere 3 bis 6 Gew.%, hierbei von besonderem Vorteil ist. Wird diese Gruppe gemeinsam mit anderen Gruppe ($a_{21}$), ($a_{23}$) und/oder ($a_{24}$) verwendet, so verringert sich ihr Gehalt in ($a_2$) um die Menge der übrigen in ($a_2$) enthaltenen Gruppen ($a_{21}$), ($a_{23}$) und/oder ($a_{24}$), sofern die Gesamtmenge der Gruppen ($a_{21}$) bis ($a_{24}$) 60 Gew.% von ($a_2$) erreicht. Hierbei ist es von Vorteil, wenn das Gewichtsverhältnis von ($a_{22}$) zu den Gruppen ($a_{21}$) und/oder ($a_{24}$) größer als 1 ist, sofern diese mitverwendet werden.

Bei der Gruppe ($a_{23}$) handelt es sich um die 4′-Methylphenyl-ethylengruppe, welche sich von dem Monomer p-Methylstyrol ableitet. Ist diese Gruppe alleine in ($a_2$) enthalten, so soll ihre Menge 1 Gew.%, vorzugsweise 2 Gew.% und insbesondere 4 Gew.%, von ($a_2$) nicht unterschreiten und 60 Gew.% von ($a_2$) nicht überschreiten. Es hat sich gezeigt, daß eine ($a_{23}$)-Menge in ($a_2$) von 1 bis 30 Gew.%, vorzugsweise 1 bis 10 Gew.% und insbesondere 3 bis 6 Gew.%, hierbei von besonderem Vorteil ist. Wird diese Gruppe gemeinsam mit anderen Gruppen ($a_{21}$), ($a_{22}$) und/oder ($a_{24}$) verwendet, so verringert sich ihr Gehalt in ($a_2$) gleichfalls um die Menge der übrigen in ($a_2$) enthaltenen Gruppen ($a_{21}$), ($a_{22}$) und/oder ($a_{24}$), sofern die Gesamtmenge der Gruppen ($a_{23}$), ($a_{21}$), ($a_{22}$) und/oder ($a_{24}$) 60 Gew.% von ($a_2$) erreicht. Es ist indes von ganz besonderem Vorteil die Gruppe ($a_{23}$) und die Gruppe ($a_{22}$) gemeinsam zu verwenden. Hierbei kann das Gewichtsverhältnis von ($a_{23}$) zu ($a_{22}$) breit variieren, mit der Maßgabe, daß hierdurch die ($a_{22}$)- oder die ($a_{23}$)-Menge im Anteil ($a_2$) jeweils nicht unter 1 Gew.% gesenkt wird.

Bei der Gruppe ($a_{24}$) handelt es sich um Gruppen der allgemeinen Formel (I), welche sich von Acryl- oder Methacrylsäureestern ableiten. Beispiele gut geeigneter Gruppen ($a_{24}$) sind die 1-Carboxymethyl-, -ethyl-, -propyl-, -i-propyl-, -n-butyl-, -tert.-butyl-, -amyl-, -hexyl-, heptyl-, -octyl-, -2′-ethylhexyl-, -nonyl-, -decyl-, -cyclopentyl-, -cyclohexyl-, -2′-methylcyclohexyl-, -2′,4′-dimethylcyclohexyl-, -phenyl-, -4′-methylphenyl- oder 1-Carboxynaphthyl-ethylengruppen oder die entsprechenden 1-Methylethylengruppen. Diese gut geeigneten Gruppen leiten sich vom Methyl-, Ethyl-, Propyl-, i-Propyl-, n-Butyl-, sek.-Butyl-, tert.-Butyl-, Amyl-, Hexyl-, Heptyl-, Octyl-, 2′-Ethylhexyl-, Nonyl-, Decyl-, Cyclopentyl-, Cyclohexyl-, 2′-Methylcyclohexyl-, 2′,4′-Dimethylcyclohexyl-, Phenyl-, 4′-Methylphenyl- oder dem Naphthylester der Acrylsäure oder Methacrylsäure ab. Hierbei sind die Gruppen ($a_{24}$), welche sich von den Methacrylsäureestern ableiten, besonders bevorzugt, von denen wiederum die 1-Carboxy-2′-ethylhexyl-, die 1-Carboxyphenyl- und die 1-Carboxy-4′-methylphenyl-1-methylethylengruppen ganz besonders bevorzugt sind. Diese können einzeln oder in Kombination verwendet werden.

Sind Gruppen ($a_{24}$) alleine in ($a_2$) enthalten, so soll ihre Menge 0,01 Gew.%, vorzugsweise 1 Gew.% und insbesondere 4 Gew.%, von ($a_2$) nicht unterschreiten und 10 Gew.% von ($a_2$) nicht überschreiten. Es ist von besonderem Vorteil, wenn die Gruppen ($a_{24}$) nicht alleine sondern gemeinsam mit den übrigen Gruppen ($a_{21}$), ($a_{22}$) und/oder ($a_{23}$) verwendet werden. Hierbei liegt das Gewichtsverhältnis von ($a_{24}$) zu diesen übrigen Gruppen im Bereich von 0,01 bis 1, und insbesondere 0,2 bis 1. Bei dieser gemeinsamen Verwendung der Gruppe ($a_{24}$) mit den übrigen Gruppen ($a_{21}$), ($a_{22}$) und/oder ($a_{23}$), soll ihr Anteil an ($a_2$) die für ihre Einzelanwendung maßgebliche Höchstgrenze von 10 Gew.% an ($a_2$) nicht überschreiten und die maßgebliche untere Grenze von 0,01 Gew.% an ($a_2$) nicht unterschreiten.

Erfindungsgemäß können die Gruppen ($a_{21}$), ($a_{22}$), ($a_{23}$) und/oder ($a_{24}$) im Anteil ($a_2$) des den Träger (a) aufbauenden Gemischs aus PPE und ($a_2$) als statistisch verteilte Monomereinheiten in den Polymerhauptketten von Styrolcopolymerisaten vorliegen. Hierbei handelt es sich dann um statistische Copolymerisate von Styrol und den entsprechenden Monomeren, wie sie an sich bekannt und durch radikalische Copolymerisation herstellbar sind. Diese statistischen Copolymerisate weisen im allgemeinen ein zahlen-

mittleres Molgewicht $\overline{M}_n$ von $2 \cdot 10^3$ bis $3 \cdot 10^5$ auf. Die Copolymerisate müssen die vorstehend angegebenen, erfindungsgemäß zu verwendenden Zusammensetzungen aufweisen. Beispiele besonders vorteilhafter statistischer Copolymerisate sind Copolymerisate, hergestellt durch radikalische Copolymerisation von

- 93 Gew.-Teilen Styrol und 7 Gew.-Teilen Acrylnitril;

- 95 Gew.-Teilen Styrol, 3 Gew.-Teilen Acrylnitril, 1 Gew.-Teil Methacrylsäure-2-ethylhexylester und 1 Gew.-Teil Methacrylsäure-phenylester;

- 70 Gew.-Teilen Styrol und 30 Gew.-Teilen α-Methylstyrol;

- 70 Gew.-Teilen Styrol und 30 Gew.-Teilen p-Methylstyrol;

- 60 Gew.-Teilen Styrol, 15 Gew.-Teilen α-Methylstyrol und 25 Gew.-Teilen p-Methylstyrol;

oder

- 50 Gew.-Teilen Styrol, 45 Gew.-Teilen α-Methylstyrol, 3 Gew.-Teilen Acrylnitril und 2 Gew.-Teilen Methacrylsäure-4′-methylphenylester,

von denen die Styrol-α-Methylstyrol-, Styrol-p-Methylstyrol- und die Stryol-α-Methylstyrol-p-Methylstyrol-Copolymerisate ganz besonders bevorzugt sind.

Erfindungsgemäß können die Gruppen ($a_{21}$), ($a_{22}$), ($a_{23}$) und/oder ($a_{24}$) im Anteil ($a_2$) des den Träger (a) aufbauenden Gemischs aus PPE und ($a_2$) aber auch in Form von einheitlichen oligomeren oder polymeren Blöcken aus ($a_{21}$), ($a_{22}$), ($a_{23}$) und/oder ($a_{24}$) vorliegen. Diese Blöcke können als Bestandteil von Styrolcopolymerisaten in den Polymerhauptketten der Styrolpolymerisate eingebaut vorliegen und/oder als seitenständige Reste mit den Polymerhauptketten der Styrolpolymerisate verknüpft sein. In diesem Fall handelt es sich also um Pfropf- oder Blockmischpolymerisate des Styrols mit Acrylnitril, α-Methylstyrol, p-Methylstyrol und/oder den vorstehend genannten (Meth)Acrylaten. Derartige Pfropf- und Blockmischpolymerisate sind an sich bekannt und können nach den hierfür üblichen Verfahrensweisen hergestellt werden. Die genaue Art der Verknüpfung der verwendeten Blöcke untereinander ist an sich beliebig variierbar, solange die Block- und Pfropfmischpolymerisate insgesamt die vorstehend angegebenen, erfindungsgemäß zu verwendenden Zusammensetzungen aufweisen. Liegen diese Zusammensetzungen außerhalb der kritischen Grenzen, so sind die betreffenden Block- oder Pfropfmischpolymerisate - unabhängig von einer gegebenenfalls vorliegenden speziellen Art der Blockverknüpfung -ungeeignet für den Aufbau des erfindungsgemäß zu verwendenden Trägers (a).

Es ist indessen erfindungsgemäß von besonderem Vorteil, wenn im Anteil ($a_2$) des den Träger (a) aufbauenden Gemischs aus PPE und ($a_2$) die Gruppen ($a_{21}$), ($a_{22}$), ($a_{23}$) und/oder ($a_{24}$) die Monomereinheiten von oligomeren oder polymeren Homopolymerisaten, Copolymerisaten oder Block- oder Pfropfmischpolymerisaten bilden, die separat hergestellt und anschließend mit Polystyrol in einer solchen Menge gemischt werden, daß die Zusammensetzung des in dieser Weise resultierenden Anteils ($a_2$) innerhalb der vorstehend angegebenen kritischen Grenzen liegt. In diesem Fall besteht also dasn den Träger (a) aufbauende Gemisch aus PPE, Polystyrol, mindestens einem Homo- oder Copolymerisat aus den Gruppen ($a_{21}$), ($a_{22}$), ($a_{23}$) und/oder ($a_{24}$) sowie gegebenenfalls weiteren Zusatzstoffen. Das Polystyrol hat dabei im allgemeinen ein massenmittleres Molgewicht $\overline{M}_w$ von über $8 \cdot 10^4$, insbesondere im Bereich von $1 \cdot 10^5$ bis $2 \cdot 10^5$. Hierbei ist es von ganz besonderem Vorteil, die Gruppen ($a_{22}$) und ($a_{23}$) gemeinsam zu verwenden. Diese Gruppen bilden dabei vorzugsweise die Monomereinheiten von oligomeren α-Methylstyrol-p-Methylstyrol-Copolymerisaten, welche in an sich bekannter Weise durch radikalische Copolymerisation in Substanz oder in Lösung hergestellt werden können und dann dem Polystyrol in den erfindungsgemäß erforderlichen Menge hinzugefügt werden. Die erfindungsgemäß ganz besonders bevorzugten Copolymerisate dieser Art haben ein Zahlenmittleres Molgewicht $\overline{M}_n$ von $5 \cdot 10^3$ bis $1{,}5 \cdot 10^4$. Im allgemeinen weisen sie ein massenmittleres Molgewicht $\overline{M}_w$ von $5 \cdot 10^3$ bis $3 \cdot 10^4$., vorzugsweise von $6 \cdot 10^3$ bis $2{,}5 \cdot 10^4$ und insbesondere von $7 \cdot 10^3$ bis $2 \cdot 10^4$, auf. Im allgemeinen bestehen diese Copolymerisate, bezogen auf ihre jeweilige Menge, aus 1 bis 99 Gew.%, insbesondere 2 bis 98 Gew.%, an 1-Methyl-1-phenylethylengruppen ($a_{22}$) und 99 bis 1 Gew.%, insbesondere 98 bis 2 Gew.%, an 4′-Methylphenyl-ethylengruppen ($a_{23}$). Diese Copolymerisate werden zu dem Polystyrol in einer Menge von, bezogen auf ($a_2$), 1 bis 30 Gew.%, vorzugsweise 4 bis 23 Gew.% und insbesondere 4 bis 5 Gew.%, hinzugegeben, wobei sich auch Zusatzmengen dieser Copolymerisate zum Polystyrol im Bereich von etwa 7,5 bis etwa 16 Gew.%,

bezogen auf ($a_2$), als äußerst günstig und vorteilhaft erwiesen haben. Hierbei ist darauf zu achten, daß die für die Einzelanwendung der Gruppen ($a_{22}$) und ($a_{23}$) maßgebliche untere Grenze von jeweils 1 Gew.%, bezogen auf ($a_2$), nicht unterschritten wird, was indes leicht vermieden werden kann, indem man entsprechend zusammengesetzte Copolymerisate auswählt. Es hat sich jedoch gezeigt, daß diese für die Einzelanwendung der Gruppen ($a_{22}$) und ($a_{23}$) jeweils maßgeblichen unteren Grenzen im Fall der vorstehend beschriebenen, besonders bevorzugten Ausführungsform der Erfindung, gemäß der der Anteil ($a_2$) des den Träger (a) aufbauenden Gemisches aus einer gegebenenfalls Zusatzstoffe enthaltenden Mischung aus Polystyrol und den vorstehend beschriebenen niedermolekularen $\alpha$-Methylstyrol-p-Methylstyrol-Copolymerisaten gebildet wird, nicht so kritisch sind, so daß in diesem Fall hiervon auch abgewichen werden, d.h. eine dieser Untergrenzen für ($a_{22}$) oder ($a_{23}$) auch unterschritten werden kann, ohne daß gravierende Nachteile in Kauf genommen werden müssen.

Ferner kann der Anteil ($a_2$) des den Träger (a) aufbauenden Gemischs aus PPE und ($a_2$) hiermit verträglich Zusatzstoffe aufweisen, wobei unter "verträglich" die Tatsache verstanden wird, daß sich diese Zusatzstoffe in dem Gemisch ohne Trübung verteilen und darin auch im Laufe der Zeit unter dem Einfluß von Laserlicht keine Trübungen bilden. Diese Zusatzstoffe sollen deshalb generell in dem Gemisch molekulardispers verteilt sein. Überdies sollen sie Licht der Wellenlänge $\lambda$ im Bereich von 720 bis 1000 nm nur schwach oder gar nicht absorbieren. Im allgemeinen kann es sich bei diesen Zusatzstoffen um Antioxidantien, Schmiermittel, Weichmacher und Farbstoffe handeln. Beispiele geeigneter Zusatzstoffe sind tert.-Butylkresol, Weißöl und Zinkstearat. Die Zusatzstoffe können in einer Menge von bis zu 10 Gew.%, bezogen auf ($a_2$), zugegeben werden, wobei dann darauf zu achten ist, daß hierdurch der Polystyrolanteil oder der Gehalt an Phenylethylengruppen ($a_{25}$) in ($a_2$) nicht unter 40 Gew.% sinkt.

Ein ganz besonders bevorzugter Träger (a) des erfindungsgemäßen flächenförmigen, mehrschichtigen, laseroptischen Aufzeichnungsmaterials weist in einer seiner Oberflächen ($a_1$) konzentrische oder spiralförmige Spurrillen oder andere zur Führung der Laserstrahlen geeignete Strukturen auf und besteht aus einem Gemisch aus, bezogen auf das Gemisch,

34 bis 40 Gew.% PPE und

60 bis 66 Gew.% des Anteils ($a_2$),

wobei der Anteil ($a_2$) dieses Gemisches, bezogen auf ($a_2$), aus

68,7 bis 96,889 Gew.% Polystyrol eines massenmittleren Molgewichts $\overline{M}_w$ von über $8 \bullet 10^4$,

3 bis 25 Gew.% eines statistischen Copolymerisats aus, bezogen auf seine Menge, 2 bis 98 Gew.% einpolymerisiertem $\alpha$-Methylstyrol und 98 bis 2 Gew.% einpolymerisiertem p-Methylstyrol mit einem massenmittleren Molgewicht $\overline{M}_w$ von $7 \bullet 10^3$ bis $2 \bullet 10^4$,

0,1 bis 6 Gew.% eines Weichmachers, z.B. Weißöl,

0,01 bis 0,1 Gew.% eines Antioxidans, z.B. tert.-Butylkresol, und

0,001 bis 0,2 Gew.% eines Farbstoffs, welcher Licht der Wellenlänge $\lambda > 720$ nm nur schwach oder gar nicht absorbiert,

besteht.

Der weitere wesentliche Bestandteil des erfindungsgemäßen, flächenförmigen, mehrschichtigen, laseroptischen Aufzeichnungsmaterials ist seine amorphe, thermisch veränderbare Aufzeichnungsschicht (b). Hierbei handelt es sich um die üblichen und bekannten Aufzeichnungsschichten, wie sie für die laseroptische Datenaufzeichnung nach den eingangs geschilderten Prinzipien üblicherweise verwendet werden. Im allgemeinen ist die Aufzeichnungsschicht (b) 10 bis 500 nm dick.

Darüber hinaus können die erfindungsgemäßen Aufzeichnungsmaterialien weitere Schichten enthalten, welche gleichfalls für die Funktion der Aufzeichnungsmaterialien von Bedeutung sein können, wie etwa übliche und bekannte Reflektionsschichten, Antireflektionsschichten oder Haftschichten oder Schichten, die sich beim Erhitzen zersetzen und Gase bilden. Außerdem können den Aufzeichnungsschichten (b) noch optisch klare Schutzschichten aufliegen, welche verhindern, daß Schmutzpartikel oder Kratzer im Laserfokus zu liegen kommen oder daß die Schichten (b) korrodieren. Im allgemeinen werden hierfür übliche und bekannte Polymerisate oder Siliziumoxide verwendet. Zu diesem Zweck kann das erfindungsgemäße

Aufzeichnungsmaterial auch noch mit einer optisch klaren Abdeckhaube in üblicher und bekannter Weise, wie etwa durch Ultraschallschweißen, verbunden werden.

Zwei erfindungsgemäße Aufzeichnungsmaterialien können außerdem paarweise so miteinander verbunden werden, daß ihre Aufzeichnungsschichten einander parallel zugekehrt sind und ein gewisser Abstand zwischen ihnen herrscht. Dieser Abstand kann in üblicher und bekannter Weise mit Hilfe von Abstandshaltern, wie Stegen oder kleinen Säulen, eingestellt werden. Ein einzelnes erfindungsgemäßes Aufzeichnungsmaterial kann aber auch zwei Aufzeichnungsschichten auf den einander gegenüberliegenden Seiten eines Trägers (a) aufweisen.

Die Herstellung des erfindungsgemäßen Aufzeichnungsmaterials kann nach üblichen, vom Stand der Technik her an sich bekannten Methoden erfolgen. Im allgemeinen gehen diese von der formgebenden Verarbeitung des den Träger (a) aufbauenden Gemischs mit Hilfe der Spritzgußtechnik aus. Üblicher- und zweckmäßigerweise wird die strukturierte Oberfläche ($a_1$) des Trägers (a) beim Spritzgießen des Trägers (a) in der gewünschten Form ausgebildet. Nach dem Spritzgießen des Trägers (a) (Verfahrensschritt I) wird die jeweilige Aufzeichnungsschicht (b), gegebenenfalls nach dem Aufbringen von Zwischenschichten, Reflektionsschichten u.a., auf der oder den strukturierten Oberflächen ($a_1$) des jeweiligen Trägers (a) durch Aufdampfen, Aufsputtern oder durch Lösungsbeschichtung aufgetragen (Verfahrensschritt II). Hiernach können auf der jeweiligen Aufzeichnungsschicht (b) weitere Schichten aufgetragen werden, welche der Funktion des Aufzeichnungsmaterials dienlich sind. Danach kann das Aufzeichnungsmaterial mit einer Abdeckhaube versehen werden.

Das den Träger (a) aufbauende Gemisch aus PPE und dem erfindungsgemäß zu verwendenden Anteil ($a_2$) kann an und für sich mit Hilfe beliebiger, üblicher und bekannter Mischungstechniken hergestellt werden. Im Rahmen der vorliegenden Erfindung hat es sich indes als besonders vorteilhaft erwiesen, das Gemisch durch Coextrusion seiner Bestandteile auf einem Zweischneckenentgasungsextruder herzustellen. Hierbei schmilzt man den Anteil ($a_2$) des Gemischs auf dem Extruder auf und dosiert das PPE als hochkonzentrierte, vorzugsweise 10 bis 80 %ige Lösung in Toluol oder Ethylbenzol kontinuierlich der Schmelze hinzu. Die Bestandteile werden auf dem Extruder bei Temperaturen von 200 bis 400 °C homogen miteinander vermischt, wobei man das Lösungsmittel kontinuierlich abdestilliert. Das PPE kann indes dem Extruder auch in fester Form, beispielsweise als Granulat, zugeführt werden. Das resultierende Gemisch wird unter Reinraumbedingungen aus dem Extruder ausgetragen, granuliert und der Spritzgußmachine zugeführt. Man kann indes das Gemisch auch direkt in die Spritzgußmaschine leiten.

Die erfindungsgemäßen Aufzeichnungsmaterialien können mittels eines Schreiblaserstrahls mit analogen oder digitalen Daten beschrieben werden, wobei man zum Einschreiben analoger Daten bekanntermaßen einen analog modulierten Dauerstrichlaser und zum Einschreiben digitaler Daten einen impulsmodulierten Laser verwendet.

Im allgemeinen weisen geeignete Laser bei der Schreibwellenlänge $\lambda$ eine Strahlleistung von 1 bis 20 mW auf. Der Fokus-Durchmesser des Schreiblaserstrahls liegt im allgemeinen bei 300 bis 2000 nm. Im allgemeinen beträgt die Impulsdauer bei der Bestrahlung mit einem impulsmodulierten Laser 10 bis 1000 ns. Vorteilhafterweise verwendet man zum Einschreiben. einen Laserstrahl von Licht der Wellenlänge $\lambda$, welches von der betreffenden Aufzeichnungsschicht (b) gut absorbiert wird. Vorteilhaft sind Wellenlängen $\lambda$ von 400 bis 1000 nm.

Beim Schreibvorgang wird der Laserstrahl in relativer Bewegung über das Aufzeichnungsmaterial hinweggeführt und trifft dabei senktrecht oder schräg auf dieses auf. Beim senkrechten Auftreffen kann er, beim schrägen Auftreffen muß er auf die Aufzeichnungsschicht (b) fokussiert sein. An der Auftreffstelle wird die Aufzeichnungsschicht (b) lokal erhitzt und es entstehen thermisch veränderte Bereiche, beispielsweise in der Form von Löchern, Kratern, Flecken, Reliefstrukturen oder ummagnetisierten Bereichen. Beim Einschreiben von Daten mit impulsmodulierten Laserstrahlen haben diese Bereiche im wesentlichen eine runde oder ovale Grundfläche eines Durchmessers von 100 bis 2000 nm, beim Einschreiben mit einem analog modulierten Dauerstrichlaser können sie beliebige geformte Grundflächen haben.

Die erfindungsgemäßen Aufzeichnungsmaterialien eignen sich hervorragend für alle bekannten Arten der laseroptischen Datenaufzeichnung. Insbesondere eignen sie sich hervorragend für die magneto-optische Datenaufzeichnung.

Das Schreiben der Daten in die Aufzeichnungsschicht (b) kann von der dem Träger (a) abgewandten Seite der Schicht her oder durch den optisch klaren Träger (a) hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge $\lambda'$ liegt unterhalb der Schwellenleistung, ab der ein Beschreiben möglich wird. Im allgemeinen liegt die Strahlleistung bei 0,1 bis 2 mW. Vorteilhafterweise verwendet man Laserlicht der Wellenlänge $\lambda'$, welches von der Aufzeichnungsschicht stark reflektiert wird. Vorteilhaft sind

Wellenlängen $\lambda'$ von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht oder schräg auf dieses auf. Beim senkrechten Auftreffen kann er, beim schrägen Auftreffen muß er auf die Aufzeichnungsschicht (b) fokussiert sein.

Trifft der Leselaserstrahl beim Überstreichen der Aufzeichnungsschicht (b) auf einen thermisch veränderten Bereich, so ändern sich die Eigenschaften des vom Aufzeichnungsmaterial transmittierten oder reflektierten Lichts, was mit Hilfe geeigneter Detektoren nachgewiesen werden kann.

Dabei kann das Lesen der Daten in der Aufzeichnungsschicht (b) von der dem Träger (a) abgewandten Seite der Schicht (b) her oder durch den Träger (a) hindurch erfolgen, wobei letzteres von Vorteil ist. Hierbei ist es besonders vorteilhaft, das reflektierte Licht zu erfassen.

Außerdem ist es von ganz besonderem Vorteil, hierzu Schreib- und Leselaser zu verwenden, welche Laserstrahlung im infraroten Wellenlängenbereich von 630 bis 900 nm ausstrahlen. Dabei ist es außerdem von Vorteil, wenn die Schreibwellenlänge $\lambda$ mit der Lesewellenlänge $\lambda'$ identisch ist oder sich nur wenig von ihr unterscheidet. Licht dieser Wellenlängen wird von üblichen und bekannten Halbleiter-Lasern geliefert.

Die erfindungsgemäßen Aufzeichnungsmaterialien werden somit in erfindungsgemäß bevorzugter Verfahrensweise mit impulsmoduliertem Laserlicht der Wellenlänge $\lambda$ von 630 bis 900, insbesondere 740 bis 850 nm durch den Träger (a) hindurch beschrieben.

Danach werden die beschriebenen Aufzeichnungsmaterialien in erfindungsgemäß bevorzugter Verfahrensweise mit Laserlicht der Wellenlänge $\lambda'$ von 630 bis 900, insbesondere 740 bis 850 nm von der Seite des Trägers (a) her ausgelesen, wobei man das von der Aufzeichnungsschicht (b) reflektierte Licht erfaßt.

Liegen die erfindungsgemäßen Aufzeichnungsmaterialien als Datenplatten vor, so können für das Schreiben und Lesen digitaler Daten die üblichen und bekannten Plattenlaufwerke verwendet werden.

Die erfindungsgemäßen Aufzeichnungsmaterialien weisen zahlreiche besondere Vorteile auf.

So sind sie in einfacher Weise herstellbar, wobei ihr Eigenschaftsprofil besonders leicht und zuverlässig reproduziert werden kann.

Wegen der besonderen vorteilhaften Eigenschaften des den Träger (a) aufbauenden Gemischs lassen sich die Träger (a) unter besonders materialschonenden Bedingungen spritzgießen. Dabei kommt es zu einer ganz hervorragenden Abformung der Spurrillen, welche über die gesamte Fläche des Trägers (a) hinweg ein konstant gutes Formprofil aufweisen. Die Träger (a) weisen nach ihrer Herstellung keine thermische Verformung und eine erheblich verminderte innere Spannung auf. Überdies kann der PPE-Anteil an dem Gemisch unter den vom Stand der Technik her bekannten abgesenkt werden, ohne daß der hieraus hergestellte Träger (a) eine Doppelbrechung zeigt. Die Verminderung des vergleichsweise schwierig zu verarbeitenden PPE-Anteils im Gemisch führt neben einer Kostenreduzierung zu einem noch schonenderen und exakteren Spritzgußverfahren. Dabei weisen die entsprechenden Träger (a) dann noch immer eine hervorragende Wärmeformbeständigkeit und Dimensionsstabilität, einen hohen E-Modul und eine hohe Härte sowie ein äußerst geringe Wasseraufnahme auf. Darüber hinaus absorbieren sie Licht einer Wellenlänge $\lambda$ von über 600 nm in sehr geringem Umfang oder gar nicht mehr, so daß sie sich in besonderem Maße für das allgemein bevorzugte Schreiben und Lesen der Daten durch den Träger (a) hindurch eignen. Darüber hinaus eignen sich die Träger (a) auch hervorrangend für die Herstellung von Audio- oder Video-Compact-Disks. Gegenstand der Erfindung sind neben den vorerwähnten laseroptischen Aufzeichnungsmaterialien mit einer amorphen, thermisch veränderbaren Aufzeichnungsschicht (b) dementsprechend auch Audio- oder Video-Compact-Disks, die einen erfindungsgemäßen Träger (a) der vorstehend beschriebenen Art aufweisen. Bei den Compact-Disks werden die Dateninformationen nicht mittels Laserstrahlen in Form von thermisch veränderten Bereichen in eine Aufzeichnungsschicht eingeschrieben, sondern in bekannter Weise durch den Mastering-Prozeß auf den Disk übertragen, d.h. in den Träger (a) des Disks eingeprägt.

Das "tracking"-Verhalten der erfindungsgemäßen Aufzeichnungsmaterialien ist ausgezeichnet, d.h. die Spurlagenservo- und Autofokussiereinrichtungen der üblichen und bekannten Plattenlaufwerke funktionieren bei den erfindungsgemäßen Aufzeichnungsmaterialien in sehr exakter Weise. Dabei sprechen die Spurlagenservo- und Autofokussiereinrichtungen auf die erfindungsgemäßen Aufzeichnungsmaterialien sogar besser an als auf Aufzeichnungsmaterialien, welche lediglich bekannte Träger enthalten.

Insgesamt weisen die erfindungsgemäßen Aufzeichnungsmaterialien eine erhöhte Lebensdauer auf, können mit vergleichsweise geringer Laserleistung beschrieben werden und haben ein Signal-Rausch-Verhältnis von über 45 dB. Wegen ihrer besonders hohen Bit-Dichte und ihrer ausgesprochen niedrigen Bitfehlerrate eignen sich die Aufzeichnungsmaterialien hervorragend für das Aufzeichnen von Videosignalen. Darüber hinaus sind sie als Archivdatenplatten geeignet.

Beispiele und Vergleichsversuche

Bei den folgenden Beispielen und Vergleichsversuchen wurde die Dicke der einzelnen Schichten an rasterelektronenmikroskopischen Aufnahmen bestimmt.

Das Signal-Rausch-Verhältnis wurde in bekannter Weise an Aufzeichnungsmaterialien ermittelt, welche mit Hilfe eines impulsmodulierten Lasers (Wellenlänge λ des emittierten Lichts: 830 nm; Pulsdauer 500 ns; Lichtleistung: 6 mW) durch den Träger (a) hindurch beschrieben worden waren. Hierzu wurden die Aufzeichnungsmaterialien mit Hilfe eines Dauerstrich-Lasers (Wellenlänge λ des emittierten Lichts: 780 nm; Lichtleistung: 0,5 mW) durch den Träger (a) hindurch gelesen. Der emittierte Leselaserstrahl wurde dabei stets mit einer relativen Geschwindigkeit von 4 m/s über die Aufzeichnungsschichten hinweggeführt. Dabei wurde stets das von den Aufzeichnungsmaterialien reflektierte Licht erfaßt und analysiert.

In den folgenden Beispielen und Vergleichsversuchen wurden Träger (a) verwendet, welche auf ihrer Oberfläche konzentrische Spurrillen enthielten. Die Spurrillen dienen der exakten Führung der Schreib- und Leselaserstrahlen, welche vom laseroptischen Schreib- und Lesekopf des Plattenlaufwerks emittiert werden. Hierzu ist es notwendig, daß die im laseroptischen Kopf vorhandenen Spurlagenservoeinrichtungen scharfe optische Signale erhalten. Diese Signale entstehen durch Beugung des vom Aufzeichnungsmaterial zu dem laseroptischen Kopf reflektierten Laserlichts an der Grenze zwischen "groove" und "land", wobei man zur Erfassung und Analyse dieser Lichtsignale die hierfür üblichen und bekannten Photodiodenanordnungen verwendet. Für das "tracking"-Verhalten, d.h. die exakte Führung, insbesondere der Leselaserstrahlen, ist es wesentlich, daß ein hoher optischer Kontrast zwischen "land" und "groove" besthet, weil ansonsten nur schwache und verbreiterte oder gar keine Signale mehr erhalten werden. Letzteres ist oftmals bei beschriebenen Aufzeichnungsmaterialien der Fall. Dies führt aber zu einem geringen Signal-Rausch-Verhältnis und erschwert das Wiederauffinden eingeschriebener Daten. Als Maß für die Güte des "trackings" werden daher im allgemeinen die Breite der Signale sowie der Unterschied in der Intensität des von einem "groove" und von einem "land" reflektierten Laserlichts herangezogen. Ein zusätzliches Qualitätskriterium ist, ob dieser Intensitätsunterschied über den gesamten Durchmesser des Aufzeichnungsmaterials hinweg konstant und hoch ist.

Demnach wurde im folgenden das "tracking"-Verhalten der Aufzeichnungsmaterialien über das Lesen der Materialien mit einem Leselaserstrahl (λ = 780 nm; Lichtleistung: 0,5 mW) quer zu den Spurrillen ermittelt. Hierbei wurde über den gesamten Durchmesser des Aufzeichnungsmaterials hinweg gemessen. Das dabei reflektierte Laserlicht wurde mit Hilfe üblicher und bekannter optischer Anordnungen erfaßt, Photodioden zugeleitet und durch geeignete elektronische Bauelemente in elektrische Signale umgewandelt, deren Höhe als Funktion des Durchmessers aufge zeichnet wurde. Es wurde beurteilt, ob die Unterschiede zwischen der Höhe der von den "lands" erhaltenen Signale und der von den "grooves" erhaltenen über den gesamten Durchmesser des Aufzeichnungsmaterials hinweg konstant scharf und hoch waren, und es wurde aus der Beurteilung die folgende Benotung des "tracking"-Verhaltens gebildet:

"sehr gut" scharfe Signale; hoher Unterschied zwischen den Höhen der "land"- und "groove"-Signale, welcher über den gesamten Durchmesser hinweg konstant ist;

"gut" scharfe Signale; geringer Unterschied zwischen den betreffenden Signalhöhen, welcher über den gesamten Druchmesser hinweg mehr oder weniger stark variiert;

"unbefriedigend" breite, verwaschene Signale; geringer Unterschied zwischen den betreffenden Signalhöhen; gegebenenfalls variiert dieser Unterschied auch noch über den gesamten Druchmesser hinweg mehr oder weniger stark;

"schlecht" kein Unterschied mehr zwischen den betreffenden Signalhöhen.

Um zu prüfen, ob das Beschreiben der Aufzeichnungsmaterialien eine Veränderung in ihrem "tracking"-Verhalten zur Folge hatte, wurden sowohl die unbeschriebenen als auch die beschriebenen Aufzeichnungsmaterialien in der oben erläuterten Weise vermessen und benotet. Ergaben sich hierbei gravierende Unterschiede in der "tracking"-Qualität eines Aufzeichnungsmaterials im unbeschriebenen Zustand einerseits und im beschriebenen Zustand andererseits, so stellte dies einen schwerwiegenden Nachteil dar. War dieser Qualitätsunterschied, von einem hohen Niveau aus ausgehend, gering, so belegte dies die besondere

Vorteilhaftigkeit des betreffenden Aufzeichnungsmaterials.

Der Schmelzflußindex (MFI) der hergestellten Gemische, die Reflektivität (%) und die Schreibempfindlichkeit (nJ) der Aufzeichnungsschichten (b) sowie die Doppelbrechung der Träger (a) wurden mit Hilfe üblicher und bekannter Meßverfahren ermittelt.

Beispiele 1 bis 2 und Vergleichsversuch 1

Herstellung und Eigenschaften erfindungsgemäß zu verwendender Träger (a) (Beispiele 1 und 2) und eines bekannten Trägers (Vergleichsversuch 1);

Es wurden unter exakt vergleichbaren Bedingungen Gemische hergestellt, in welchen der Poly(2,6-dimethylphenylenether)-Anteil (PPE) nach der Lehre der US-A-4 373 065 nicht dazu ausreichte, die Orientierungsdoppelbrechung der Gemische vollständig zu kompensieren. Die Gemische wiesen die folgende Zusammensetzung auf:

Vergleichsversuch 1

32,5 kg radikalisch polymerisiertes Polystyrol mit einem massenmittleren Molgewicht $\overline{M}_w$ von 1,65 • $10^5$ und
17,5 kg Poly(2,6-dimethylphenylenether) (PPE);

Beispiel 1

30,0 kg Polystyrol wie bei Vergleichsversuch 1,
2,5 kg eines Copolymerisats aus $\alpha$-Methylstyrol (10 Gew.%) und p-Methylstyrol (90 Gew.%) mit einem massenmittleren Molgewicht $\overline{M}_w$ von 9•$10^3$ und
17,5 kg PPE wie bei Vergleichsversuch 1;

Beispiel 2

27,5 kg Polystyrol wie bei Vergleichsversuch 1,
5,0 kg eines Copolymerisats wie bei Beispiel 1 und
17,5 kg PPE wie bei Vergleichsversuch 1.

Der Anteil ($a_2$) der Gemische (Vergleichsversuch 1: Polystyrol; Beispiele 1 und 2: Polystyrol plus Copolymerisat) wurde auf einem Zweischneckenentgasungsextruder aufgeschmolzen, und das PPE wurde zu der jeweiligen Schmelze als 60 %ige Lösung in Toluol hinzudosiert.

Die Gemische wurden auf dem Zweischneckenextruder unter Entgasung bei 280 °C und einer Verweilzeit von einer Minute homogenisiert, unter Reinraumbedingungen aus dem Extruder ausgetragen und zu Granulat verarbeitet.

Die bei 110 °C vorgetrockneten Granulate wurden unter Reinraumbedingungen auf einer 90 to-Spritzgußmaschine und einem Spezialwerkzeug für optische Speicherplatten zu Scheiben [Träger (a), Beispiele 1 und 2; bekannter Träger, Vergleichsversuch 1] verspritzt. Hierbei wurden auf einer Seite der Träger konzentrische Spurrillen mittels einer in das Werkzeug eingelegten Nickelmatrize eingeprägt. Die Träger waren 1,2 mm dick und hatten einen Durchmesser von 130 mm; die eingeprägten Spurrillen waren

70 nm tief und 0,6 µm breit ("groove") mit einem Abstand von 1,6 µm ("land").

Für jedes der drei Gemische wurden die Spritzgußparameter eingestellt, wobei hauptsächlich auf Planarität der Träger und minimale Doppelbrechung zwischen gekreuzten Polfiltern optimiert wurde. Die Ergebnisse finden sich in Tabelle 1.

Tabelle 1

| Spritzgußparameter der Gemische und Eigenschaftsprofil der daraus hergestellten Träger | | | | |
|---|---|---|---|---|
| Spritzgußparameter und Eigenschaftsprofil der Träger | | Vgl.vers. 1 | Beispiel 1 | Beispiel 2 |
| Schmelzflußindex MFI nach DIN 53 735 der Gemische bei 300 °C und einer Auflagekraft von 5 kp | (g/10 min) | 66 | 81 | 97 |
| Einspritzgeschwindigkeit der Gemische | (mm/sec) | 90 | 100 | 120 |
| optimale Einspritztemperatur für die Gemische | (°C) | 350 | 340 | 330 |
| Farbe der Träger | | gelb | gelb | hellgelb |
| Maximale Doppelbrechung der Scheiben im Radiusbereich 25 bis 60 mm | (nm) | 15 | 2 | 2 |
| Spurrillenabformung auf den Trägern | | gut | sehr gut | sehr gut |
| Planlage der Träger | | gut | sehr gut | sehr gut |
| Maximale Dauergebrauchstemperatur der Träger | (°C) | 125 | 125 | 125 |

Wie der Vergleich zeigt, sind bei den erfindungsgemäßen Trägern (a) der Beispiele 1 und 2 viele Verbesserungen gegenüber denjenigen des Vergleichsversuchs 1 eingetreten: Die Erniedrigung der Schmelzviskosität führte zur Senkung der Einspritztemperatur und zu verringerter thermischer Schädigung der Gemische. Weiterhin wurde die Abformung im Werkzeug deutlich verbessert, ohne daß die maximale Dauergebrauchstemperatur abgesenkt wurde. Hervorzuheben ist besonders die drastische Verringerung der Orientierungsdoppelbrechung auf fast nicht mehr meßbare Werte. Demnach sind die erfindungsgemäßen Träger (a) (Beispiele 1 und 2) dem bekannten Träger (Vergleichsversuch 1) eindeutig überlegen.

Beispiele 3 bis 4 und Vergleichsversuch 2

Herstellung und Eigenschaften erfindungsgemäßer Aufzeichnungsmaterialien (Beispiele 3 und 4) und eines bekannten Aufzeichnungsmaterials (Vergleichsversuch 2);

Bei 3000 Umdrehungen/min wurden auf einer Schleuderbeschichtungsanlage jeweils zwei der Träger (a) aus den Beispielen 1 und 2 (für die Beispiele 3 und 4) sowie zwei bekannte Träger aus dem Vergleichsversuch 1 (für den Vergleichsversuch 2) mit einer propanolischen Lösung (4 Gew.%) einer Mischung aus einem bei $\lambda$ = 700 bis 850 nm absorbierenden Farbstoff und einem Lösungspolymerisat aus Methylmethacrylat und Methacrylsäure beschichtet. Das Gewichtsverhältnis Farbstoff/Polymerisat war 70:30. Als Farbstoff wurde ein Trichinocyclopropanfarbstoff verwendet. Nach dem Trocknen wurden Aufzeichnungsmaterialien mit ca. 100 nm dicken Aufzeichnungsschichten (b) erhalten, deren Reflektivität für Licht der Wellenlänge $\lambda$ = 780 nm zu 19 % bestimmt wurde (Messung in bekannter Weise durch die Träger hindurch).

Jeweils zwei gleiche Aufzeichungsmaterialien wurden mit den Farbstoffschichten nach innen sandwichartig verklebt, wobei ein Abstandsring von 300 µm Dicke als Abstandshalter dazwischengelegt wurde.

Auf einem Plattenlaufwerk wurden in die "grooves" der Aufzeichnungsmaterialien digitale Daten eingeschrieben. Anschließend wurden die Daten gelesen.

Die hierbei erhaltenen Ergebnisse finden sich in Tabelle 2.

Tabelle 2

| Laseroptische Datenaufzeichnung mit erfindungsgemäßen und nicht erfindungsgemäßen Aufzeichnungsmaterialien | | | |
|---|---|---|---|
| Parameter | Vergleichsversuch 2[a] | Beispiel 3[b] | Beispiel 4[c] |
| Schreibempfindlichkeit | 1-2 nJ | 1-2 nJ | 1-2 nJ |
| Lesesignal | gut | gut | gut |
| "tracking"-Verhalten des unbeschriebenen Aufzeichnungsmaterials | gut | sehr gut | sehr gut |
| "tracking"-Verhalten des beschriebenen Aufzeichnungsmaterials | unbefriedigend | gut | gut |

a) Träger aus Vergleichsversuch 1
b) Träger (a) aus Beispiel 1
c) Träger (a) aus Beispiel 2

Die Ergebnisse lassen sich wie folgt zusammenfassen:

Während die durch die Farbstoffschicht bedingten anwendungstechnischen Eigenschaften wie Schreibempfindlichkeit und Lesesignal von den unterschiedlichen Trägern nicht beeinflußt wurden, konnte bei den erfinungsgemäßen Aufzeichnungsmaterialien (Beispiele 3 und 4) eine deutliche Verbesserung der Spurführung beobachtet werden: Die sehr eng beschriebenen Teile des bekannten Aufzeichnungsmaterials konnten kaum gelesen werden, bei den erfindungsgemäßen Aufzeichnungsmaterialien dagegen war die Spurführung mühelos einzuhalten.

Beispiel 5

Herstellung und Eigenschaften eines erfindungsgemäßen Aufzeichnungsmaterials mit einer Aufzeichnungsschicht (b) aus Tellur;

Auf einem gemäß Beispiel 1 hergestellten Träger (a) wurde in einer Vakuumapparatur einseitig Tellur in einer Schichtdicke von 50 nm aufgedampft.

Auf einem Plattenlaufwerk wurden digitale Daten in die "grooves" eingeschrieben und anschließend ausgelesen. Das Signal/Rauschverhältnis betrug 52 dB.

Beispiel 6

Herstellung und eigenschaften eines erfindungsgemäßen magneto-optischen Aufzeichnungsmaterials;

Auf mehrere gemäß Beispiel 1 hergestellte Träger (a) wurde in einer Hochvakuumapparatur eine 90 nm dicke AlN-Schicht aufgesputtert. Anschließend wurde im Vakuum ein Gemisch der Zusammensetzung 2 Gew.-Teil Nd, 18 Gew.-Teile Dy, 95 Gew.-Teile Tb und 30 Gew.-Teile Co in einer Schichtdicke von 75 nm aufgebracht. Zum Schutz der magneto-optischen Aufzeichnungsschicht wurde auf diese eine 50 nm dicke $SiO_x$-Schicht aufgedampft. Auf einem Plattenlaufwerk wurden in die Aufzeichnungsschicht digitale Daten eingeschrieben und magneto-optisch ausgelesen. Das Signal/Rauschverhältnis war stets 50 dB.

Vergleichsversuch 3

Herstellung und Eigenschaften eines magneto-optischen Aufzeichnungsmaterials mit einem bekannten Träger;

Beispiel 6 wurde wiederholt mit dem Unterschied, daß anstelle der erfindungsgemäß zu verwendenden Träger (a) Träger aus dem Vergleichsversuch 1 verwendet wurden.

Die so erhaltenen Aufzeichnungsmaterialien wiesen ein Signal/Rauschverhältnis von unter 45 dB auf.

Beispiel 7

Herstellung und Eigenschaften einer Audio-Compact-Disk mit einem erfindungsgemäß zu verwendenden Träger (a);

Aus dem in Beispiel 1 beschriebenen Gemisch wurden Audio-Compact-Disks hergestellt. Dazu wurde das Granulat vorgetrocknet und mit der gleichen Spritzgußmaschine aber einem anderen Werkzeug mit einer Compact-Disk-Matrize verspritzt. Die erhaltenen Träger (a) hatten einen Durchmesser von 100 mm

und waren frei von Doppelbrechung.

Die leicht gelben Träger (a) wurden im Vakuum mit einer dünnen Aluminium-Schicht bedampft und mit einem Schutzlack überzogen. In einem handelsüblichen Gerät wurden die Compact-Disks abgespielt; irgendwelche Unterschiede zu den üblichen Polycarbonat-Platten hinsichtlich der Wiedergabequalität konnten nicht festgestellt werden.

**Ansprüche**

1. Flächenförmiges, mehrschichtiges, laseroptisches Aufzeichnungsmaterial mit
a) einer oder mehreren Schichten aus einem optisch klaren und isotropen, homogenen, von Orientierungsdoppelbrechung freien Gemisch von Poly(2,6-dimethylphenylenether) (PPE) mit einem Styrolpolymerisat als Träger und
b) mindestens einer amorphen, thermisch veränderbaren Aufzeichnungsschicht,
dadurch gekennzeichnet, daß die den dimensionsstabilen Träger bildende Schicht (a)

$a_1$) eine oder zwei strukturierte Oberflächen aufweist, wobei die Strukturen im Mikrometer-und/oder Submikrometerbereich liegen,

und aus einem solchen PPE, mindestens ein Styrolpolymerisat sowie gegebenenfalls Zusatzstoffe enthaltenden Gemisch gebildet wird, in dem der Gehalt von PPE im Bereich von 25 bis 45 Gew.%, bezogen auf das Gemisch, liegt und in dem

$a_2$) derjenige Anteil des Gemischs, bei dem es sich nicht um PPE handelt, bezogen auf diesen Anteil ($a_2$),
$a_{21}$) 0,1 bis 8 Gew.% an Cyanoethylengruppen und/oder
$a_{22}$) 1 bis 60 Gew.% an 1-Methyl-1-phenyl-ethylengruppen und/oder
$a_{23}$) 1 bis 60 Gew.% an 4′-Methylphenyl-ethylengruppen und/oder
$a_{24}$) 0,01 bis 10 Gew.% an Gruppen der allgemeinen Formel I

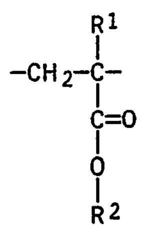

I,

worin $R^1$ ein Wasserstoffatom oder einen Methylrest und $R^2$ einen $C_1$- bis $C_{10}$-Alkyl-, $C_5$- bis $C_8$-Cycloalkyl- oder einen $C_6$- bis $C_{10}$-Arylrest bedeutet,
enthält, mit der Maßgabe, daß
$a_{25}$) gleichgültig ob eine oder mehrere der Gruppen ($a_{21}$) bis ($a_{24}$) und darüber hinaus gegebenenfalls auch noch Zusatzstoffe in ($a_2$) enthalten sind, der Anteil ($a_2$) in jedem Fall einen Gehalt an Phenylethylengruppen von nicht kleiner als 40 Gew.% aufweist.

2. Aufzeichnungsmaterial nach Anspruch 1, dadurch gekennzeichnet, daß das den Träger (a) bildende Gemisch neben dem PPE sowie gegebenenfalls den Zusatzstoffen Styrolcopolymerisate enthält, in denen die Gruppen ($a_{21}$), ($a_{22}$), ($a_{23}$) und/oder ($a_{24}$) sowie die Gruppen ($a_{25}$) als statistisch verteilte Monomereinheiten vorliegen.

3. Aufzeichnungsmaterial nach Anspruch 2, dadurch gekennzeichnet, daß die statistischen Styrolcopolymerisate ein zahlenmittleres Molgewicht $\overline{M}_n$ im Bereich von $2 \cdot 10^3$ bis $3 \cdot 10^5$ aufweisen.

4. Aufzeichnungsmaterial nach Anspruch 2 oder 3, dadurch gekennzeichnet, daß in den statistischen Styrolcopolymerisaten neben den Phenylethylengruppen ($a_{25}$) die Gruppen ($a_{22}$) und/oder ($a_{23}$) vorliegen.

5. Aufzeichnungsmaterial nach Anspruch 1, dadurch gekennzeichnet, daß das den Träger (a) bildende Gemisch neben dem PPE sowie gegebenenfalls den Zusatzstoffen Styrolcopolymerisate enthält, in denen die Gruppen ($a_{21}$), ($a_{22}$), ($a_{23}$) und/oder ($a_{24}$) sowie die Gruppen ($a_{25}$) in Form einheitlicher oligomerer oder polymerer Blöcke vorliegen, welche in Form von Block- oder Pfropfmischpolymerisaten miteinander verknüpft sind.

6. Aufzeichnungsmaterial nach Anspruch 1, dadurch gekennzeichnet, daß in dem Anteil ($a_2$) des Gemischs die Gruppen ($a_{21}$), ($a_{22}$), ($a_{23}$) und/oder ($a_{24}$) die Monomereinheiten von oligomeren oder polymeren Homo- oder Copolymerisaten oder von Block- oder Pfropfmischpolymerisaten bilden, die separat hergestellt und dann einem Polystyrol hinzugefügt wurden.

7. Aufzeichnungsmaterial nach Anspruch 6, dadurch gekennzeichnet, daß in dem Anteil ($a_2$) des Gemischs die Gruppen ($a_{22}$) und ($a_{23}$) die Monomereinheiten eines oligomeren, statistischen Copolymerisates bilden, das separat hergestellt und dann einem Polystyrol hinzugefügt wurde.

8. Aufzeichnungsmaterial nach Anspruch 6 oder 7, dadurch gekennzeichnet, daß das den Träger (a) bildende Gemisch aus PPE, Polystyrol, einem statistischen $\alpha$-Methylstyrol-p-Methylstyrol-Copolymerisat mit einem zahlenmittleren Molgewicht $\overline{M}_n$ im Bereich von $5 \bullet 10^3$ bis $1{,}5 \bullet 10^4$ sowie gegebenenfalls Zusatzstoffen besteht.

9. Aufzeichnungsmaterial nach einem der Ansprüche 1 bis 8, dadurch gekennzeichnet, daß der Anteil ($a_2$) des Gemischs, bezogen auf diesen Anteil, 0,1 bis 10 Gew.% an Zusatzstoffen, wie Antioxidantien, Weichmachern, Schmiermitteln und Farbstoffen, welche in dem Gemisch molekulardispers verteilt sind und Licht der Wellenlänge $\lambda$ von 720 bis 1000 nm nur schwach oder gar nicht absorbieren, enthält.

10. Aufzeichnungsmaterial nach Anspruch 9, dadurch gekennzeichnet, daß der Träger (a) in einer seiner Oberflächen ($a_1$) konzentrische oder spiralförmige Spurrillen oder andere zur Führung von Laserstrahlen geeignete Strukturen aufweist und aus einem Gemisch aus, bezogen auf dieses Gemisch,

34 bis 40 Gew.% PPE und
60 bis 66 Gew.% des Anteils ($a_2$)

aufgebaut ist, wobei der Anteil ($a_2$) dieses Gemisches, bezogen auf ($a_2$), aus

68,7 bis 96,889 Gew.% Polystyrol eines massenmittleren Molgewichts $\overline{M}_w$ von über $8 \bullet 10^4$
3 bis 25 Gew.% eines statistischen Copolymerisats, das bezogen auf seine Menge, 2 bis 98 Gew.% an $\alpha$-Methylstyrol und 98 bis 2 Gew.% p-Methylstyrol einpolymerisiert enthält und ein massenmittleres Molgewicht $\overline{M}_w$ von $7 \bullet 10^3$ bis $2 \bullet 10^4$ aufweist,
0,1 bis 6 Gew.% eines Weichmachers, insbesondere Weißöl,
0,01 bis 0,1 Gew.% eines Antioxidans, insbesondere tert.-Butylkresol, und
0,001 bis 0,2 Gew.% eines Farbstoffs, welcher Licht der Wellenlänge $\lambda > 720$ nm nur schwach oder gar nicht absorbiert,
besteht.

11. Flächenförmiges, mehrschichtiges, laseroptisches Aufzeichnungsmaterial mit
a) einer oder mehreren Schichten aus einem optisch klaren und isotropen, homogenen, von Orientierungsdoppelbrechung freien Gemisch von Poly(2,6-dimethylphenylenether) (PPE) mit Polystyrol als Träger
und
b) mindestens einer amorphen, thermisch veränderbaren Aufzeichnungsschicht,
dadurch gekennzeichnet, daß die den dimensionsstabilen Träger bildende Schicht (a)
($a_1$) eine oder zwei strukturierte Oberflächen aufweist, wobei die Strukturen im Mikrometer-und/oder Submikrometerbereich liegen,
und aus einem solchen PPE und Polystyrol enthaltenden Gemisch gebildet wird, in dem der Gehalt an PPE im Bereich von 25 bis 45 Gew.%, bezogen auf das Gemisch, liegt und in dem
$a_2$) derjenige Anteil des Gemischs, bei dem es sich nicht um PPE handelt, aus, bezogen auf diesen Anteil ($a_2$),

1 bis 30 Gew.% mindestens eines oligomeren statistischen $\alpha$-Methylstyrol-p-Methylstyrol-Copolymerisats,
0 bis 10 Gew.% an Zusatzstoffen sowie
dem Rest zu 100 Gew.% aus Polystyrol besteht.

12. Aufzeichnungsmaterial nach Anspruch 11, dadurch gekennzeichnet, daß das den Träger (a) bildende Gemisch aus, bezogen auf dieses Gemisch, 34 bis 40 Gew.% PPE und 60 bis 66 Gew.% des Anteils ($a_2$) besteht.

13. Aufzeichnungsmaterial nach Anspruch 11 oder 12, dadurch gekennzeichnet, daß das $\alpha$-Methylstyrol-p-Methylstyrol-Copolymerisat ein zahlenmittleres Molgewicht $\overline{M}_n$ von $5 \bullet 10^3$ bis $1{,}5 \bullet 10^4$ aufweist.

14. Aufzeichnungsmaterial nach einem der Ansprüche 11 bis 13, dadurch gekennzeichnet, daß das $\alpha$-Methylstyrol-p-Methylstyrol-Copolymerisat ein massenmittleres Molgewicht im Bereich von $6 \bullet 10^3$ bis $2{,}5 \bullet 10^4$, insbesondere im Bereich von $7 \bullet 10^3$ bis $2 \bullet 10^4$, aufweist.

15. Aufzeichnungsmaterial nach einem der Ansprüche 11 bis 14, dadurch gekennzeichnet, daß das α-Methylstyrol-p-Methylstyrol-Copolymerisat, bezogen auf das Copolymerisat, 2 bis 98 Gew.% an α-Methylstyrol und 98 bis 2 Gew.% an p-Methylstyrol einpolymerisiert enthält.

16. Aufzeichnungsmaterial nach einem der Ansprüche 11 bis 15, dadurch gekennzeichnet, daß das α-Methylstyrol-p-Methylstyrol-Copolymerisat in dem Anteil ($a_2$) in einer Menge von 4 bis 23 Gew.%, bezogen auf ($a_2$), enthalten ist.

17. Aufzeichnungsmaterial nach einem der Ansprüche 11 bis 16, dadurch gekennzeichnet, daß in dem den Träger (a) bildenden Gemisch 0,1 bis 10 Gew.%, bezogen auf den Anteil ($a_2$), an Zusatzstoffen, wie Antioxidantien, Weichmachern, Schmiermitteln und Farbstoffen, welche in dem Gemisch molekulardispers verteilt sind und Licht der Wellenlänge λ von 720 bis 1000 nm nur schwach oder gar nicht absorbieren, enthalten sind.

18. Audio- oder Video-Compact-Disk mit einem dimensionsstabilen Informationsträger mit einer strukturierten Oberfläche mit die Informationen enthaltenden Strukturen im Mikro- und/oder Submikrometerbereich und mindestens einer auf der strukturierten Oberfläche befindlichen Überzugs- und/oder Schutzschicht, dadurch gekennzeichnet, daß der Informationsträger (a) aus einem optischen klaren und isotropen, homogenen Gemisch von Poly(2,6-dimethylphenylenether) (PPE) mit einem Styrolpolymerisat gebildet wird, wobei der Gehalt an PPE in diesem Gemisch im Bereich von 25 bis 45 Gew.%, bezogen auf das Gemisch, liegt und wobei der Anteil ($a_2$) des Gemisches, der nicht PPE ist, bezogen auf diesen Anteil ($a_2$),
$a_{21}$) 0,1 bis 8 Gew.% an Cyanoethylengruppen und/oder
$a_{22}$) 1 bis 60 Gew.% an 1-Methyl-1-phenyl-ethylengruppen und/oder
$a_{23}$) 1 bis 60 Gew.% an 4′-Methylphenyl-ethylengruppen und/oder
$a_{24}$) 0,01 bis 10 Gew.% an Gruppen der allgemeinen Formel I

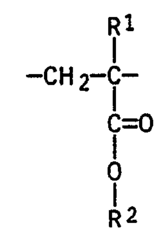 I,

worin $R^1$ ein Wasserstoffatom oder einen Methylrest und $R^2$ einen $C_1$- bis $C_{10}$-Alkyl-, $C_5$- bis $C_8$-Cycloalkyl- oder einen $C_6$- bis $C_{10}$-Arylrest bedeutet,
enthält, mit der Maßgabe, daß
$a_{25}$) gleichgültig ob eine oder mehrere der Gruppen ($a_{21}$) bis ($a_{24}$) und darüber hinaus gegebenenfalls auch noch Zusatzstoffe in ($a_2$) enthalten sind, der Anteil ($a_2$) in jedem Fall einen Gehalt an Phenylethylengruppen von nicht kleiner als 40 Gew.% aufweist.

19. Audio- oder Video-Compact-Disk nach Anspruch 18, dadurch gekennzeichnet, daß das den Informationsträger (a) bildende Gemisch neben dem PPE sowie gegebenenfalls den Zusatzstoffen Styrol-Copolymerisate enthält, in denen die Gruppen ($a_{21}$), ($a_{22}$), ($a_{23}$) und/oder ($a_{24}$) sowie die Gruppen ($a_{25}$) als statistisch verteilte Monomereinheiten vorliegen.

20. Compact-Disk nach Anspruch 19, dadurch gekennzeichnet, daß die statistischen Styrolcopolymerisate ein zahlenmittleres Molgewicht $\overline{M}_n$ im Bereich von $2 \cdot 10^3$ bis $3 \cdot 10^5$ aufweisen.

21. Compact-Disk nach Anspruch 19 oder 20, dadurch gekennzeichnet, daß in den statistischen Styrolcopolymerisaten neben den Phenylethylengruppen ($a_{25}$) die Gruppen ($a_{22}$) und/oder ($a_{23}$) vorliegen.

22. Compact-Disk nach Anspruch 18, dadurch gekennzeichnet, daß das den Informationsträger (a) bildende Gemisch neben dem PPE sowie gegebenenfalls den Zusatzstoffen Styrolcopolymerisate enthält, in denen die Gruppen ($a_{21}$), ($a_{22}$), ($a_{23}$) und/oder ($a_{24}$) sowie die Gruppe ($a_{25}$) in Form einheitlicher oligomerer oder polymerer Blöcke vorliegen, welche in Form von Block- oder Pfropfmischpolymerisaten miteinander verknüpft sind.

23. Compakt-Disk nach Anspruch 18, dadurch gekennzeichnet, daß in dem Anteil ($a_2$) des Gemischs die Gruppen ($a_{21}$), ($a_{22}$), ($a_{23}$) und/oder ($a_{24}$) die Monomereinheiten von oligomeren oder polymeren Homo- oder Copolymerisaten oder von Block- oder Pfropfmischpolymerisaten bilden, die separat hergestellt und dann einem Polystyrol hinzugefügt wurden.

24. Compakt-Disk nach Anspruch 23, dadurch gekennzeichnet, daß in dem Anteil ($a_2$) des Gemischs die Gruppen ($a_{22}$) und($a_{23}$) die Monomereinheiten eines oligomeren, statistischen Copolymerisates bilden, das separat hergestellt und dann einem Polystyrol zugemischt wurde.

25. Compact-Disk nach Anspruch 23 oder 24, dadurch gekennzeichnet, daß das den Informationsträger (a) bildende Gemisch aus PPE, Polystyrol, einem statistischen α-Methylstyrol-p-Methylstyrol-Copolymerisat mit einem zahlenmittleren Molgewicht $\overline{M}_n$ im Bereich von $5 \bullet 10^3$ bis $1{,}5 \bullet 10^4$ sowie gegebenenfalls Zusatzstoffen besteht.

26. Compact-Disk nach einem der Ansprüche 18 bis 25, dadurch gekennzeichnet, daß der Anteil ($a_2$) des Gemischs, bezogen auf diesen Anteil, 0,1 bis 10 Gew.% an Zusatzstoffen, wie Antioxidantien, Weichmachern, Schmiermitteln und Farbstoffen, welche in dem Gemisch molekulardispers verteilt sind und Licht der Wellenlänge λ von 720 bis 1000 nm nur schwach oder gar nicht absorbieren, enthält.

27. Compact-Disk nach Anspruch 26, dadurch gekennzeichnet, daß der Informationsträger (a) aus einem Gemisch aus

34 bis 40 Gew.% PPE und
60 bis 66 Gew.% des Anteils ($a_2$)

aufgebaut ist, wobei der Anteil ($a_2$) dieses Gemisches, bezogen auf ($a_2$), aus

68,7 bis 96,889 Gew.% Polystyrol eines massenmittleren Molgewichts $\overline{M}_w$ von über $8 \bullet 10^4$
3 bis 25 Gew.% eines statistischen Copolymerisats, das bezogen auf seine Menge, 2 bis 98 Gew.% an α-Methylstyrol und 98 bis 2 Gew.% p-Methylstyrol einpolymerisiert enthält und ein massenmittleres Molgewicht $\overline{M}_w$ von $7 \bullet 10^3$ bis $2 \bullet 10^4$ aufweist,
0,1 bis 6 Gew.% eines Weichmachers, insbesondere Weißöl,
0,01 bis 0,1 Gew.% eines Antioxidans, insbesondere tert.-Butylkresol, und
0,001 bis 0,2 Gew.% eines Farbstoffs, welcher Licht der Wellenlänge $\lambda > 720$ nm nur schwach oder gar nicht absorbiert,

besteht.

28. Audio- oder Video-Compact-Disk mit einem dimensionsstabilen Informationsträger mit einer strukturierten Oberfläche mit die Informationen enthaltenden Strukturen im Mikro- und/oder Submikrometerbereich und mindestens einer auf der strukturierten Oberfläche befindlichen Überzugs- und/oder Schutzschicht, dadurch gekennzeichnet, daß der Informationsträger (a) aus einem optischen klaren und isotropen, homogenen Gemisch von Poly(2,6-dimethylpehnylenether) (PPE) mit Polystyrol gebildet wird, wobei der Gehalt an PPE in diesem Gemisch im Bereich von 25 bis 45 Gew.%, bezogen auf das Gemisch, liegt und wobei der Anteil ($a_2$) des Gemisches, bei dem es sich nicht um PPE handelt, aus, bezogen auf diesen Anteil ($a_2$),

1 bis 30 Gew.% eines oligomeren statistischen α-Methylstyrol-p-Methylstyrol-Copolymerisats,
0 bis 10 Gew.% an Zusatzstoffen sowie
dem Rest zu 100 Gew.% aus Polystyrol

besteht.

29. Compact-Disk nach Anspruch 28, dadurch gekennzeichnet, daß das den Informationsträger (a) bildende Gemisch aus, bezogen auf dieses Gemisch, 34 bis 40 Gew.% PPE und 60 bis 66 Gew.% des Anteils ($a_2$) besteht.

30. Compact-Disk nach Anspruch 28 oder 29, dadurch gekennzeichnet, daß das α-Methylstyrol-p-Methylstyrol-Copolymerisat ein zahlenmittleres Molgewicht $\overline{M}_n$ im Bereich von $5 \bullet 10^3$ bis $1{,}5 \bullet 10^4$ aufweist.

31. Compact-Disk nach einem der Ansprüche 28 bis 30, dadurch gekennzeichnet, daß das α-Methylstyrol-p-Methylstyrol-Copolymerisat ein massenmittleres Molgewicht im Bereich von $6 \bullet 10^3$ bis $2{,}5 \bullet 10^4$, insbesondere im Bereich von $7 \bullet 10^3$ bis $2 \bullet 10^4$, aufweist.

32. Compact-Disk nach einem der Ansprüche 28 bis 31, dadurch gekennzeichnet, daß das α-Methylstyrol-p-Methylstyrol-Copolymerisat, bezogen auf das Copolymerisat, 2 bis 98 Gew.% an α-Methylstyrol und 98 bis 2 Gew.% an p-Methylstyrol einpolymerisiert enthält.

33. Compact-Disk nach einem der Ansprüche 28 bis 32, dadurch gekennzeichnet, daß das α-Methylstyrol-p-Methylstyrol-Copolymerisat in dem Anteil ($a_2$) in einer Menge von 4 bis 23 Gew.%, bezogen auf ($a_2$), enthalten ist.

34. Compact-Disk nach einem der Ansprüche 28 bis 33, dadurch gekennzeichnet, daß in dem den Informationsträger (a) bildenden Gemisch 0,1 bis 10 Gew.%, bezogen auf den Anteil ($a_2$), an Zusatzstoffen, wie Antioxidantien, Weichmachern, Schmiermitteln und Farbstoffen, welche in dem Gemisch molekulardispers verteilt sind und Licht der Wellenlänge λ von 720 bis 1000 nm nur schwach oder gar nicht absorbieren, enthalten sind.